# EUROPEAN PATENT APPLICATION

(11) **EP 4 202 875 A1**
(43) Date of publication of application: **28.06.2023**
(21) Application number: 22167177.9
(22) Date of filing: 07.04.2022
(51) Int. Cl.: G07F 11/00, G06Q 20/12, G06Q 20/18, G07F 17/00, G07F 17/16

(54) **DEVICE FOR GAMEPLAY**

(30) Priority: 21.12.2021 IT 202100005882 U
(71) Applicant: Serafin, Giada, 31020 San Zenone Degli Ezzelini (TV) (IT)
(72) Inventor: Serafin, Giada, 31020 San Zenone Degli Ezzelini (TV) (IT)
(74) Representative: Rocchetto, Elena

(57) **Abstract**

The invention is a new gaming device, which includes an automatic vending machine (D) of flat or hollow elements such as balls, parallelepipeds, folders, etc., suitable to act as a container, of one or more small gift items (G) and one or more tags (T) or supports, on which a QR CODE or barcode or NFC tag is printed, inserted in said container (R). By scanning this QR CODE or barcode or NFC tag with a mobile phone or tablet (S), it is possible to access a portal or database (B) to access videogames, educational games and/or films, cartoons, etc. which can be used by the user.

## Description

This patent relates to coin-operated dispensers of items and in particular to a gaming device, which includes a dispenser of items, preferably spherical or flat, able to containing gadgets or small games or gifts.

Coin-operated and manually or automatically operated dispensers of various objects are well-known, in which the insertion of one or two or more coins enables the rotation of a knob or device which controls a mechanism for selecting and dispensing an item.

The items to be dispensed are contained in spherical or flat plastic casings to facilitate withdrawal from the tank, transit through the pipes and dispensing at the collection outlet.

By inserting one or more coins into the coin box, it is possible to rotate the release and distribution mechanisms to allow the sphere containing the gadget to come out. These devices, which can be manual, mechanical or even electromechanical, provide the user, usually a child or adolescent, with a small gift.

This solution limits the user's playful activities to the mere fact of obtaining a small game.

A new gaming device has therefore been devised to ensure a longer period of fun for the user and to extend the possibilities of fun derived from the insertion of these coins.

The aim of the invention is to allow the user to play either with the gadget contained in the container or with their phone or smartphone and extend the game for several hours or days after purchase.

The new game is activated through interconnected gaming devices such as a mechanical or electromechanical vending machine, a container, preferably spherical or flat, at least one tag equipped with QR CODE or barcode or NFC tag, a tablet or mobile phone or smartphone, a database for data and game management.

Said new gaming device comprises at least:
- an automatic vending machine of flat or hollow elements, such as folders, balls, parallelepipeds, etc.
- a flat or hollow element, transparent and/or opaque, serving as a container,
- one or more small gift items such as statuettes, souvenirs, tattoos, etc. inserted into said container,
- one or more tags or support on which a QR CODE or barcode or NFC tag is printed,
and wherein said gadget and said tag are placed inside said flat or hollow element and wherein, by scanning said QR CODE or barcode or NFC tag with a mobile phone or tablet, access is gained to a portal or database with video games, educational games and/or films, music, cartoons, etc. which can be used by the user.

The QR CODE or barcode or NFC tag could also be inside a ball or sphere which does not need to be opened to read the QR CODE or barcode or NFC tag as it is printed on an inner layer or folder, or printed directly into the toy or gadget inside the ball, this is to highlight that it can be present in any form or manner whether on the ball or inside a ball or folder.

Said hollow container can be spherical or parallelepiped, or a folder that can contain, in addition to the tag, a three-dimensional or flat gadget such as a tattoo or one or more stickers.

By scanning the tag with the QR or barcode or NFC C tag with a smartphone, mobile phone or tablet, you can connect to the database and download an electronic game that will keep the user active, in terms of play, even after receiving the gadget in the container.

By means of QR CODE or barcode or NFC tags, it will also be possible to download the rules of the game or other data such as advertising, links, e-mail addresses for web links.

Alternatively, it is possible to dispense only tags with a QR CODE or barcode or NFC tag to obtain games, information and data in general.

The gaming device, in its basic form, should also include an automatic vending machine (D) of at least one flat element or sheet or folder, etc., on which a QR CODE or barcode or NFC tag is printed and wherein, by scanning said QR CODE or barcode or NFC tag with a mobile phone or tablet (S), access is gained to a portal or database (B) to access video games, educational games and/or films, music, cartoons, etc. which can be used by the user.

The attached drawings show, by way of non-limiting example, a practical implementation of the invention.

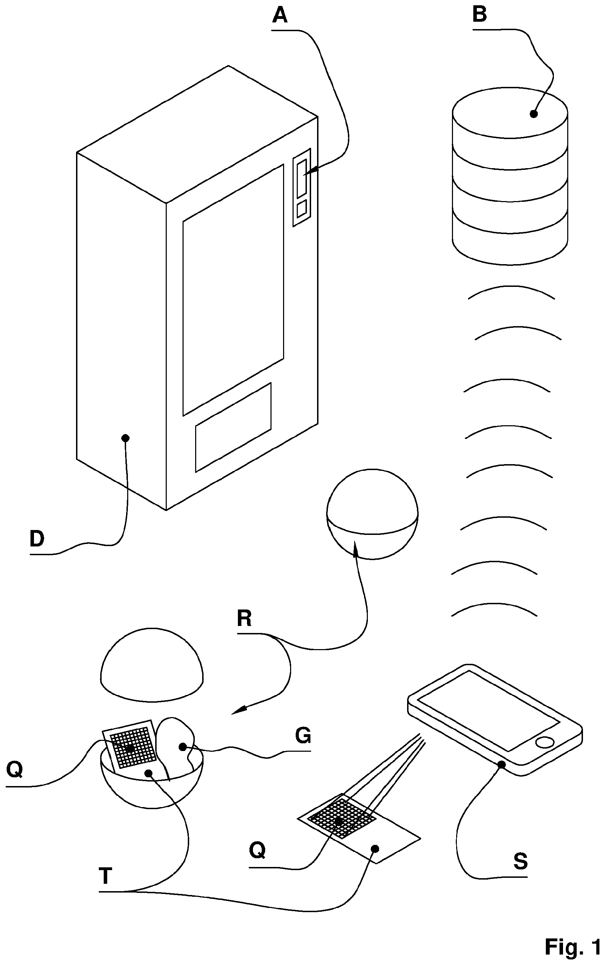

Figure 1 shows the device as a whole, which includes a vending machine (D), equipped with a coin box (A), from which the gift (R) is withdrawn, in this case consisting of a sphere-shaped casing (R), from which the gadget (G) and the tag (T), on which there is a QR CODE (Q), are extracted.

By scanning this QR CODE with a mobile phone or smartphone (S), a connection is activated with the database (B) to download a video game.

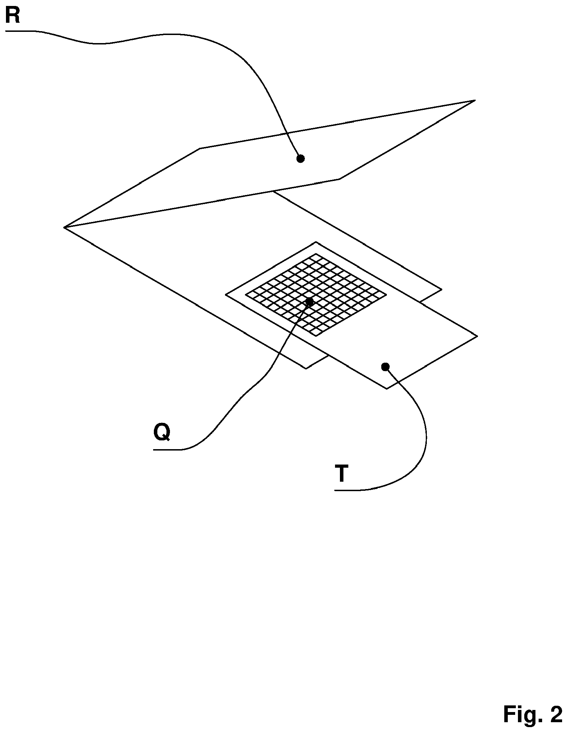

Figure 2 shows the flat container (R), equipped inside with the gadget and the tag (T) with the QR CODE (Q) printed on it to connect with the database (B) and download the electronic game.

These are the schematic methods sufficient for the skilled person to realise the invention; consequently, in practical application, there may be variations without prejudice to the substance of the innovative concept.

Therefore, with reference to the foregoing description and the enclosed drawings, the following claims are made.

## Claims

1. New gaming device **characterized in that** it includes a vending machine (D) of at least one flat element or sheet or folder, (T) etc., *and wherein* at least one QR CODE or barcode or NFC tag is printed on said element (T) *and wherein,* by scanning said QR CODE or barcode or NFC tag with a mobile phone or tablet (S), a portal or database (B) is accessed to access videogames, educational games and/or films, music, cartoons, etc., which can be used by the user.

2. New gaming device according to claim 1, **characterized in that** it includes:
• said vending machine (D) of flat elements, sheets or folders, etc.
• a flat-opening element (R) acting as a container,
• one or more tags (T) or supports on which at least one QR CODE or barcode or NFC tag is printed, inserted in said container (R).
*and wherein* said tag (T) is placed inside said flat element (R) *and wherein,* by scanning said QR CODE or barcode or NFC tag with a mobile phone or tablet (S), access is gained to a portal or database (B) for accessing video games, educational games and/or films, cartoons, etc. which can be used by the user.

3. New gaming device, according to claims 1, 2, **characterized in that** said container (R) of any suitable shape, in addition to said tag (T) includes one or more small gift items (G), such as gadgets, statuettes, souvenirs, tattoos, etc., inserted into said opening container element (R).

4. New gaming device according to claims 1, 2, 3, **characterized in that** said vending machine (D) is of the mechanical or electromechanical type.

5. New gaming device according to claim 3, **characterized in that** said opening element (R) is a sphere.

6. New gaming device according to claims 2, 3, 4, 5, **characterized in that** said flat or hollow opening element is transparent.

7. New gaming device according to claims 1, 2, 3, 4, 5, 6, **characterized in that** said tag or support (T) is of the paper type.

8. New gaming device according to claims 1, 2, 3, 4, 5, 6, **characterized in that** said tag or support (T) is of the heat-shrinking type.

9. New gaming device according to any of the preceding claims, **characterized in that** said QR CODE or barcode or NFC tag may vary according to the vending machine, the sum entered, the location or other variables.
